# EUROPEAN PATENT APPLICATION

(11) **EP 4 319 233 A1**
(43) Date of publication of application: **07.02.2024**
(21) Application number: 22803833.7
(22) Date of filing: 10.05.2022
(51) Int. Cl.: H04W 12/122

(54) **COMMUNICATION METHOD AND COMMUNICATION APPARATUS**

(30) Priority: 21.05.2021 CN 202110560563
(71) Applicant: Huawei Technologies Co., Ltd., Shenzhen, Guangdong 518129 (CN)
(72) Inventor: XIANG, Hongyu, Shenzhen, Guangdong 518129 (CN); XU, Bin, Shenzhen, Guangdong 518129 (CN); CHEN, Lei, Shenzhen, Guangdong 518129 (CN); LI, Bingzhao, Shenzhen, Guangdong 518129 (CN)
(74) Representative: Gill Jennings & Every LLP
(86) International application number: PCT/CN2022/092040
(87) International publication number: WO 2022/242511

(57) **Abstract**

A communication method and a communication apparatus are provided. The method includes: When one or more of the following conditions are met, a terminal device determines that local first system information is abnormal: a quantity of times of sending first signaling is greater than or equal to a first preset threshold within first preset duration; a time length in which a first service is unavailable is greater than or equal to a second preset threshold; a change trend of a tag value of a same system information block is abnormal; or a quantity of changes in a tag value of a same system information block is greater than or equal to a third preset threshold within second preset duration; and the terminal device receives second system information from an access network device, where the second system information is used to update the local first system information. Therefore, the terminal device can determine as soon as possible whether the local first system information is abnormal, that is, whether the terminal device is attacked by a rogue base station, and receive system information again when determining that the first system information is abnormal, so that impact of the attack by the rogue base station on the terminal device can be eliminated as soon as possible, to improve user experience.

## Description

This application claims priority to Chinese Patent Application No. 202110560563.6, filed with the China National Intellectual Property Administration on May 21, 2021 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Communication security is an important subject in wireless communication. A rogue base station attack is a common means of threatening wireless communication security. In a possible case, a terminal device continuously measures signal quality after accessing a cell, and a rogue base station usually has better signal quality than a normal base station. Therefore, the terminal device may receive and store abnormal system information (system information, SI) from the rogue base station. Consequently, some services are unavailable for the terminal device, or services are available but user experience is poor. Even if the rogue base station leaves, the terminal device may still be unable to get rid of impact caused by a rogue base station attack in a long time.

Therefore, it is expected that a method can be provided to identify an exception of system information as soon as possible, so as to get rid of impact caused by the exception.

### SUMMARY

Embodiments of this application provide a communication method and a communication apparatus to identify whether system information is abnormal as soon as possible, so as to get rid of impact caused by a rogue base station attack.

According to a first aspect, this application provides a communication method. The communication method may be performed by, for example, a terminal device, or may be performed by a component (such as a chip or a chip system) configured in a terminal device. The following is merely an example, and the method provided in the first aspect is described by using a terminal device as an execution body.

For example, the method includes: When one or more of the following conditions are met, a terminal device determines that local first system information is abnormal: a quantity of times of sending first signaling is greater than or equal to a first preset threshold within first preset duration; a time length in which a first service is unavailable is greater than or equal to a second preset threshold; a change trend of a tag value of a same system information block (system information block, SIB) is abnormal; or a quantity of changes in a tag value of a same SIB is greater than or equal to a third preset threshold within second preset duration; and the terminal device receives second system information from an access network device, where the second system information is used to update the first system information.

Based on the foregoing technical solution, after the terminal device is attacked by a rogue base station and stores tampered system information, the terminal device may use a quantity of times of sending signaling, duration in which a service is unavailable, whether a change in a tag value of a SIB is abnormal, or the like as a criterion for determining whether the system information is abnormal. When it is determined that an exception exists, the terminal device receives the system information from the access network device again, so that the terminal device can get rid of impact caused by the tampered system information as soon as possible, and provide a normal service for a user as soon as possible, to improve user experience.

The following lists examples of the first signaling, the first system information corresponding to the first signaling, the first service, and the first system information corresponding to the first service. It should be understood that these examples are shown only for ease of understanding, and should not constitute any limitation on this embodiment of this application.

Optionally, the first signaling includes a tracking area update (tracking area update, TAU) request message, and the first system information includes information related to a tracking area code (tracking area code, TAC).

Optionally, the first service includes a multimedia broadcast multicast service (multimedia broadcast multicast service, MBMS), and the first system information includes information related to scheduling and receiving of the MBMS.

Optionally, the first signaling is a message 1 (message 1, MSG 1) in a random access procedure, and the first system information includes information related to a random access configuration.

Optionally, the first service includes a cell selection service and a cell reselection service, and the first system information includes information related to cell selection.

Optionally, the first service includes a random access service or a cell access service, and the first system information includes information related to access control.

Optionally, the first service includes a service provided by other system information (other system information, OSI), the first system information includes a SIB type 1, and the SIB type 1 includes scheduling information of the OSI.

With reference to the first aspect, in some possible implementations of the first aspect, the method further includes: The terminal device sends a notification message to notify the access network device that the system information in the terminal device is abnormal; that the terminal device receives the second system information from the access network device again includes: The terminal device receives the second system information from the base station again, where a tag value of the second system information is different from a tag value of the first system information.

When determining that the locally stored first system information is abnormal, the terminal device may send the notification message to the access network device to trigger the access network device to update the system information, for example, update a tag value of the system information, so that all terminal devices in a same cell can receive the updated second system information. Generally, an attack from a rogue base station is not limited to a terminal device, but may affect a plurality of terminal devices within coverage of the rogue base station. Therefore, by updating the system information by the access network device, locally stored system information of all terminal devices in a same cell can be updated, so that all terminal devices that are attacked by the rogue base station can get rid of the impact caused by tampered system information as soon as possible, and provide a normal service for a user as soon as possible, to improve user experience.

With reference to the first aspect, in some possible implementations of the first aspect, a system information parameter in the second system information is different from a system information parameter in the first system information.

It may be understood that because the first system information is system information tampered with by the rogue base station and the second system information is system information received from the normal access network device, parameters of the first system information and the second system information are definitely different.

If the access network device has updated the tag value before sending the second system information, the tag value of the second system information is also different from the tag value of the first system information.

The following lists specific implementations used by the terminal device to notify the access network device that the first system information is abnormal.

Optionally, the notification message includes the MSG 1 in the random access procedure; and that the terminal device sends a notification message to notify the access network device that the first system information is abnormal includes: The terminal device sends the MSG 1, where the MSG 1 carries a random access preamble of a pre-defined index value, the random access preamble of the pre-defined index value is used to indicate to the access network device that the first system information is abnormal; or the terminal device sends the MSG 1 on a pre-defined time domain and/or frequency domain resource, where the pre-defined time domain and/or frequency domain resource is used to indicate to the access network device that the first system information is abnormal.

Optionally, the notification message is a message 3 (message 3, MSG 3) in the random access procedure; and that the terminal device sends a notification message to notify the access network device that the first system information is abnormal includes: The terminal device sends the MSG 3, where the MSG 3 includes a pre-defined cause value, and the pre-defined cause value is used to indicate to the access network device that the first system information is abnormal.

Optionally, the notification message is radio resource control (radio resource control, RRC) dedicated signaling used to carry a measurement report, and the measurement report is obtained based on a minimization drive test (minimization of drive tests, MDT); and that the terminal device sends a notification message to notify the access network device that the first system information is abnormal includes: The terminal device sends the RRC dedicated signaling, where the RRC dedicated signaling carries an indication indicating that the first system information is abnormal.

The access network device is notified, by reusing existing signaling, that the first system information is abnormal, so that signaling overheads can be reduced.

According to a second aspect, a communication method is provided. The communication method may be performed by, for example, an access network device, or may be performed by a component (such as a chip or a chip system) configured in an access network device. The following is merely an example, and the access network device is used as an execution body to describe the method provided in the second aspect.

For example, the method includes: The access network device receives a notification message from a terminal device, where the notification message is used to indicate that first system information in the terminal device is abnormal; and the access network device sends second system information based on the notification message, where a tag value of the second system information is different from a tag value of the first system information.

When determining that the locally stored first system information is abnormal, the terminal device may send the notification message to the access network device to trigger the access network device to update the system information, for example, update a tag value of the system information, so that all terminal devices in a same cell can receive the updated second system information. Generally, an attack from a rogue base station is not limited to a terminal device, but may affect a plurality of terminal devices within coverage of the rogue base station. Therefore, by updating the system information by the access network device, locally stored system information of all terminal devices in a same cell can be updated, so that all terminal devices that are attacked by the rogue base station can get rid of the impact caused by tampered system information as soon as possible, and provide a normal service for a user as soon as possible, to improve user experience.

With reference to the second aspect, in some possible implementations of the second aspect, a system information parameter in the second system information is different from a system information parameter in the first system information.

It may be understood that because the first system information is system information tampered with by the rogue base station and the second system information is system information received from the normal access network device, parameters of the first system information and the second system information are definitely different.

If the access network device has updated the tag value before sending the second system information, the tag value of the second system information is also different from the tag value of the first system information.

With reference to the second aspect, in some possible implementations of the second aspect, that the access network device sends second system information includes: The access network device sends all system information including the second system information.

The first system information may be one or more pieces of system information, for example, may be one or more of a master information block (master information block, MIB), any type (type) of SIB, or system information related to positioning (positioning SIB, posSIB). If the terminal device does not specifically indicate specific pieces of system information that the first system information is, the access network device may send the second system information to the terminal device in a manner of sending all system information, to update the first system information.

The following lists specific implementations used by the terminal device to notify the access network device that the first system information is abnormal.

Optionally, the notification message includes the MSG 1 in the random access procedure; and that an access network device receives a notification message, where the notification message is used to indicate that first system information is abnormal includes: The access network device receives the MSG 1, where the MSG 1 carries a random access preamble of a pre-defined index value, the random access preamble of the pre-defined index value is used to indicate to the access network device that the first system information is abnormal; or the access network device receives the MSG 1 on a pre-defined time domain and/or frequency domain resource, where the pre-defined time domain and/or frequency domain resource is used to indicate to the access network device that the first system information is abnormal.

Optionally, the notification message is an MSG 3 in the random access procedure; and that an access network device receives a notification message, where the notification message is used to indicate that first system information is abnormal includes: The access network device receives the MSG 3, where the MSG 3 includes a pre-defined cause value, and the pre-defined cause value is used to indicate to the access network device that the first system information is abnormal.

Optionally, the notification message is RRC dedicated signaling used to carry a measurement report, and the measurement report is obtained based on an MDT; and that an access network device receives a notification message, where the notification message is used to indicate that first system information is abnormal includes: The access network device receives the RRC dedicated signaling, where the RRC dedicated signaling carries an indication indicating that the first system information is abnormal.

The access network device is notified, by reusing existing signaling, that the first system information is abnormal, so that signaling overheads can be reduced.

According to a third aspect, a communication method is provided. The communication method may be performed by, for example, a terminal device, or may be performed by a component (such as a chip or a chip system) configured in a terminal device. The following is merely an example, and the terminal device is used as an execution body to describe the method provided in the third aspect.

For example, the method includes: After determining that the terminal device enters a specified area, the terminal device receives system information by using first duration as a periodicity; the terminal device determines whether system information received within third preset duration changes; and the terminal device receives, when the system information does not change, the system information by using second duration as the periodicity, where the second duration is greater than the first duration, and the specified area is an area used by the terminal device to adjust valid duration of the system information level by level.

Herein, receiving the system information by using the first duration as the periodicity is specifically receiving the system information by using the first duration as the valid duration of the system information. The terminal device receives the system information once in each periodicity or each time the first duration elapses.

Based on the foregoing solution, the terminal device may monitor, by using a method for adjusting the valid duration of the system information level by level, whether the system information is abnormal. Because the valid duration of the system information is adjusted to a relatively small value in an initial state, an exception of the system information may be found in a short time. In addition, once an exception occurs, the valid duration of the system information may be adjusted level by level again. That is, when the system information changes, the terminal device pays more attention to a change status of the system information, so that duration of impact of the tampered system information on the terminal device is controlled within a relatively short time range.

With reference to the third aspect, in some possible implementations of the third aspect, after the terminal device receives, when the system information does not change, the system information by using second duration as a periodicity, the method further includes: The terminal device determines whether system information received within fourth preset duration changes; and the terminal device receives, when the system information changes, the system information by using the first duration as the periodicity; or the terminal device receives, when the system information does not change, the system information by using third duration as the periodicity, where the third duration is greater than the second duration.

In other words, once the terminal device finds that the system information changes, the terminal device falls back to receive the system information by using the first duration as the periodicity, that is, shortens the valid duration of the system information. When the duration in which the change of the system information is not found reaches the fourth preset duration, the terminal device may further adjust to receive the system information by using the third duration as the periodicity, that is, prolongs the valid duration of the system information.

With reference to the third aspect, in some possible implementations of the third aspect, that the terminal device determines whether system information received within third preset duration changes includes: The terminal device determines whether a system information parameter in the system information received within the third preset duration changes; and/or the terminal device determines whether a tag value of the system information received within the third preset duration changes.

With reference to the third aspect, in some possible implementations of the third aspect, that the terminal device determines whether system information received within fourth preset duration changes includes: The terminal device determines whether a system information parameter in the system information received within the fourth preset duration changes; and/or the terminal device determines whether a tag value of the system information received within the fourth preset duration changes.

That is, it may be considered that the system information changes provided that either the system information parameter or the tag value changes.

With reference to the third aspect, in some possible implementations of the third aspect, the method further includes: The terminal device receives indication information from a core network device, where the indication information indicates the specified area.

The terminal device may determine the specified area based on the indication information of the specified area, and adjust the valid duration of the system information level by level after entering the specified area, so that the terminal device can find more easily, in the specified area, that the system information is tampered with, and can quickly get rid of impact caused by the tampered system information.

According to a fourth aspect, a communication method is provided. The communication method may be performed by, for example, a core network device, or may be performed by a component (such as a chip or a chip system) configured in a core network device. The following is merely an example, and the core network device is used as an execution body to describe the method provided in the fourth aspect.

The core network device sends indication information to a terminal device, where the indication information indicates a specified area, and the specified area is used by the terminal device to adjust valid duration of system information level by level.

With reference to the fourth aspect, in some possible implementations of the fourth aspect, that the core network device sends indication information to a terminal device includes: The core network device sends non-access stratum (non-access stratum, NAS) signaling to the terminal device, where the NAS signaling carries the indication information.

It should be understood that the NAS signaling is merely an example, and signaling used to carry the indication information of the specified area is not limited in this application.

According to a fifth aspect, this application provides a communication apparatus. The apparatus includes modules or units configured to implement the method according to any one of the first aspect to the fourth aspect and the possible implementations of the first aspect to the fourth aspect. It should be understood that each module or unit may implement a corresponding function by executing a computer program.

According to a sixth aspect, this application provides a communication apparatus. The apparatus includes a processor. The processor is configured to perform the method according to any one of the first aspect to the fourth aspect and the possible implementations of the first aspect to the fourth aspect.

The apparatus may further include a memory, configured to store instructions and data. The memory is coupled to the processor. When executing the instructions stored in the memory, the processor can implement the method described in the foregoing aspects. The apparatus may further include a communication interface. The communication interface is used by the apparatus to communicate with another device. For example, the communication interface may be a transceiver, a circuit, a bus, a module, or another type of communication interface.

According to a seventh aspect, this application provides a chip system. The chip system includes at least one processor, configured to support implementation of the functions in any one of the first aspect to the fourth aspect and the possible implementations of the first aspect to the fourth aspect, for example, receiving or processing data and/or information involved in the foregoing methods.

In a possible design, the chip system further includes a memory, the memory is configured to store program instructions and data, and the memory is located inside or outside the processor.

The chip system may include a chip, or may include a chip and another discrete component.

According to an eighth aspect, this application provides a computer-readable storage medium, including a computer program. When the computer program is run on a computer, the computer is enabled to implement the method according to any one of the first aspect to the fourth aspect and the possible implementations of the first aspect to the fourth aspect.

According to a ninth aspect, this application provides a computer program product. The computer program product includes a computer program (which may also be referred to as code or instructions). When the computer program is run, a computer is enabled to perform the method according to any one of the first aspect to the fourth aspect and the possible implementations of the first aspect to the fourth aspect.

According to a tenth aspect, an embodiment of this application provides a communication system. The system includes the foregoing terminal device, access network device, and core network device.

It should be understood that the fifth aspect to the tenth aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a schematic diagram of encapsulating a SIB in an SI message;
FIG. 2 is a schematic diagram of an application scenario applicable to a communication method according to an embodiment of this application;
FIG. 3 is a schematic flowchart of a communication method according to an embodiment of this application;
FIG. 4 is a schematic flowchart of a communication method according to another embodiment of this application;
FIG. 5 is a schematic diagram of a specified area and a non-specified area according to an embodiment of this application;
FIG. 6 and FIG. 7 are schematic diagrams of a communication apparatus according to an embodiment of this application;
FIG. 8 is a schematic diagram of a structure of a terminal device according to an embodiment of this application; and
FIG. 9 is a schematic diagram of a structure of an access network device according to an embodiment of this application.

### DESCRIPTION OF EMBODIMENTS

Technical solutions provided in this application may be applied to various communication systems, for example, a 5^{th} generation (5^{th} Generation, 5G) mobile communication system or a new radio access technology (new radio access technology, NR). The 5G mobile communication system may include a non-standalone (non-standalone, NSA) communication system and/or a standalone (standalone, SA) communication system.

The technical solutions provided in this application may further be applied to machine type communication (machine type communication, MTC), a long term evolution-machine (Long Term Evolution-machine, LTE-M) technology, a device to device (device to device, D2D) network, a machine to machine (machine to machine, M2M) network, an internet of things (internet of things, loT) network, or another network. The IoT network may include, for example, an internet of vehicles. Communication manners in an internet of vehicles system are collectively referred to as a vehicle to X (vehicle to X, V2X, where X may represent anything) system. For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a sixth generation mobile communication system. This is not limited in this application.

In embodiments of this application, an access network (access network, AN) may provide a network access function for an authorized user in a specific area. The access network in embodiments of this application may be specifically a radio access network (radio access network, RAN), and the radio access network device may be a device that implements a network access function based on a wireless communication technology.

For example, the radio access network device may include, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node (radio relay node, RRN), a wireless backhaul node, a transmission point (transmission point, TP), a transmission and reception point (transmission and reception point, TRP), or the like; may be a gNB or a transmission point (TRP or TP) in a 5G system such as an NR system, one or one group (including a plurality of antenna panels) of antenna panels of a base station in a 5G system; or may be a network node constructing a gNB or a transmission and reception point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU may be responsible for processing a non-real-time protocol and service. For example, the CU may implement functions of a radio resource control (radio resource control, RRC) layer, a service data adaptation protocol (service data adaptation protocol, SDAP) layer, and/or a packet data convergence protocol (packet data convergence protocol, PDCP) layer. The DU may be responsible for processing a physical layer protocol and a real-time service. For example, the DU may implement functions of a radio link control (radio link control, RLC) layer, a media access control (media access control, MAC) layer, and a physical (physical, PHY) layer. One DU may be connected to only one CU or a plurality of CUs, and one CU may be connected to a plurality of DUs. The CU and the DU may communicate with each other through an F1 interface. The AAU may implement some physical layer processing functions, radio frequency processing, and a function related to an active antenna. Information at the RRC layer is eventually submitted to the PHY layer and is converted into information at the PHY layer, or is converted from information at the PHY layer. Therefore, in this architecture, higher layer signaling such as RRC layer signaling may also be considered as being sent by the DU or sent by the DU and the AAU.

It may be understood that the access network device may be a device including one or more of a CU node, a DU node, s an AAU node. In addition, the CU may be classified as an access network device in an access network (radio access network, RAN), or the CU may be classified as an access network device in a core network (core network, CN). This is not limited in this application.

The access network device provides a cell with a service, and the terminal device communicates with the cell by using a transmission resource (for example, a frequency domain resource or a spectrum resource) allocated by the access network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are characterized by small coverage and a low transmit power, and are applicable to providing a high-rate data transmission service.

In embodiments of this application, an example in which a base station is used as an access network device is used to describe the method provided in embodiments of this application. However, this should not constitute any limitation on this application.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or vehicle-mounted device with a wireless connectivity function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, and a terminal device in a future evolved public land mobile network (public land mobile network, PLMN).

The wearable device may also be referred to as a wearable smart device, and is a general term of wearable devices, such as glasses, gloves, watches, clothes, and shoes, that are developed by applying wearable technologies to intelligent designs of daily wear. The wearable device is a portable device that is directly worn on the body or integrated into clothes or an accessory of a user. The wearable device is not only a hardware device, but also a device with a strong function implemented with the support of software, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device may alternatively be a terminal device in an internet of things (Internet of things, IoT) system. An IoT is an important part in future development of information technologies. A main technical feature of the IoT is to connect things to a network by using a communication technology, to implement an intelligent network for human-machine interconnection and thing-thing interconnection. IoT technologies can achieve massive connections, intensive coverage, and power saving for terminals by using, for example, a narrowband (narrow band, NB) technology.

It should be understood that specific forms of the network device and the terminal device are not limited in this application.

In addition, for ease of understanding embodiments of this application, some terms used in embodiments of this application are first briefly described.
1. System information: The system information may specifically include an MIB, SIBs, and a posSIB.
2. MIB: The MIB is mainly used to indicate whether a current cell can be accessed, whether a terminal device is supported in performing intra-frequency cell reselection, information required by the terminal device to receive further system information (for example, a SIB 1), and the like.
3. SIBs: The SIBs include a plurality of types of SIBs. For example, in LTE, the SIBs may include a SIB type (type) 1 to a SIB type 29. For another example, in NR, the SIBs may include a SIB type 1 to a SIB type 14. It should be understood that the SIBs listed herein are merely examples. With evolution of protocols, this application does not exclude a possibility of another SIB defined in a future protocol.

For ease of differentiation and description, a SIB type X is denoted as a SIB X below, where X may be a positive integer. For example, a SIB type 1 is denoted as a SIB 1.

Different types of SIBs have different functions. For example, in NR, a SIB 1 defines scheduling of another system information block and includes information required for initial access; a SIB 2 includes cell reselection information, mainly related to a serving cell; a SIB 3 includes information about a serving frequency and intra-frequency neighboring cells related to cell reselection (for example, including frequency-shared cell reselection parameters and cell-specific reselection parameters); a SIB 4 includes information about another NR frequency and inter-frequency neighboring cells related to cell reselection (for example, including frequency-shared cell reselection parameters and cell-specific reselection parameters); a SIB 5 includes information about an evolved universal terrestrial radio access (evolved universal terrestrial radio access, E-UTRA) frequency and E-UTRA neighboring cells related to cell reselection (for example, including frequency-shared cell reselection parameters and cell-specific reselection parameters); a SIB 6 includes an earthquake and tsunami warning system (earthquake and tsunami warning system, ETWS) primary notification; a SIB 7 includes an ETWS assistance notification; a SIB 8 includes a commercial mobile alert system (commercial mobile alert system, CMAS) warning notification; and a SIB 9 includes information related to a global positioning system (global positioning system, GPS) time and a universal time coordinated (universal time coordinated, UTC). For brevity, SIBs of different types are not listed one by one herein.

SIBs other than the SIB 1 are also referred to as other system information (other system information, OSI).

4. SI message: The SIBs can be sent by using SI messages. One SIB can be transmitted only in one SI message and cannot be mapped to a plurality of SI messages. A plurality of SIBs (including OSI and posSIB) with a same periodicity may be encapsulated into a same SI message for sending.

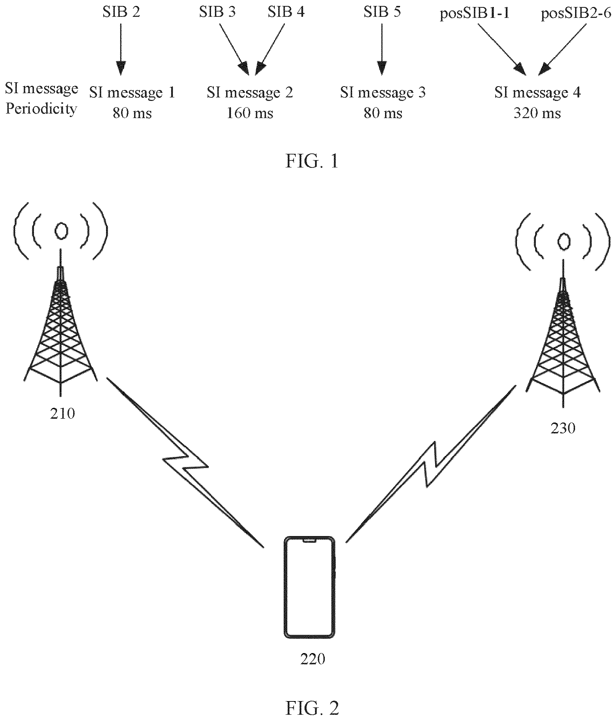

FIG. 1 shows an example in which different SIBs with a same periodicity are encapsulated in a same SI message. As shown in FIG. 1, a SIB with a periodicity of 80 milliseconds (ms) is encapsulated in an SI message 1 for sending; a SIB 3 and a SIB 4 with a periodicity of 160 ms are encapsulated in an SI message 2 for sending; a SIB 5 with a periodicity of 80 ms is encapsulated in an SI message 3 for sending; and a posSIB 1-1 and a posSIB 2-6 with a periodicity of 320 ms are encapsulated in a SIB message 4 for sending.

5. Tag value (valueTag): The tag value may correspond to the SIB. Each type of SIB may correspond to one tag value. That is, the SIB 1 may correspond to one tag value, the SIB2 may correspond to one tag value, and so on. In a protocol, each type of tag value may have a different name, but functions are similar. Each time a base station updates a SIB, a corresponding tag value may be automatically increased by one, until the tag value is increased to a preset value (for example, 31), and then the tag value is returned to zero and recounted. Therefore, the tag value may be used by a terminal device to determine whether a locally stored SIB is valid.

6. Random access (random access): Random access is an explicit process of establishing a radio link between a terminal device and a network. The terminal device can exchange data with an access network device only after random access is completed.

Random access may be classified into contention-based random access and non-contention-based random access. Contention means that a plurality of terminal devices send a same preamble sequence to an access network device in a same time unit on a same physical random access channel (physical random access channel, PRACH) resource, and expect to obtain a resource grant from the access network device. The following uses contention-based random access as an example to describe a random access procedure (random access procedure).
(1) The terminal device sends a random access preamble (random access preamble) to the access network device.
   For example, the random access preamble may be carried in a message 1 (MSG 1).
(2) After detecting the random access preamble, the access network device sends a random access response (random access response).

The random access response may include a number of the received random access preamble, timing adjustment information, indication information of an uplink resource position allocated to the terminal device, and a temporarily allocated cell-radio network temporary identifier (cell-radio network temporary identifier, C-RNTI).

For example, the random access response may be carried in a message 2 (MSG 2).

(3) After receiving the random access response, the terminal device sends an uplink message on the allocated uplink resource.

If an uplink resource is allocated to the terminal device, the terminal device may send the uplink message on the uplink resource. The uplink message may be, for example, a radio resource control (radio resource control, RRC) connection request (RRC connection request) message, or may be an RRC connection re-establishment request (RRC connection re-establishment request) message. It should be understood that in different scenarios, specific functions of uplink messages sent by the terminal device are different. This is not limited in embodiments of this application.

The uplink message sent by the terminal device on the uplink resource allocated by the access network device may be, for example, denoted as a message 3 (MSG 3).

(4) The access network device receives the uplink message from the terminal device, and returns a connection resolution (connection solution) message to the terminal device that successfully accesses the access network.

The connection solution message returned by the access network device may be, for example, denoted as a message 4 (MSG 4).

It should be understood that the foregoing describes the random access process by using the contention-based random access procedure as an example. Although the non-contention-based random access procedure is slightly different from the contention-based random access procedure, the foregoing steps (1) to (3) also exist, that is, exchanges of the MSG 1 to the MSG 3 exist. For brevity, a detailed description of the non-contention-based random access procedure is omitted herein.

7. Random access preamble: The random access preamble is also referred to as a random access preamble sequence. The access network device may broadcast, by using system information, an index value (preamble index) of the random access preamble available to each cell and a PRACH resource used by the terminal device to perform random access.

The index value of the random access preamble may also be referred to as a number of the random access preamble, and may be understood as a code domain resource of the random access preamble. The PRACH resource used to transmit the random access preamble may be understood as a time frequency resource of the random access preamble.

Generally, the terminal device obtains the system information only in a scenario such as cell selection, cell reselection, or entering a cell coverage area from outside the coverage area, and after obtaining the system information (for example, including the MIB, the SIB1, or the SI message) of a serving cell, stores a corresponding SIB and a corresponding tag value.

If a tag value of a SIB received by the terminal device in the serving cell is different from a tag value of a locally stored SIB, it is considered that the SIB is updated, and an updated SIB is obtained and stored locally. The rogue base station can use this feature to tamper with the SIB to attack the terminal device.

FIG. 2 is a schematic diagram of an application scenario applicable to a communication method according to an embodiment of this application. As shown in FIG. 2, the application scenario shown in FIG. 2 includes a base station 210 and a terminal device 220. The base station 210 is a real base station, and a coverage area of the base station 210 may be divided into one or more cells. For example, a procedure in which the terminal device 220 accesses a cell served by the base station 210 may be: The terminal device 220 receives a synchronization signal of the cell, and performs downlink synchronization with the base station based on the synchronization signal; and after the downlink synchronization is completed, the UE completes cell camping, and may receive a broadcast message from the base station 210. In addition, the terminal device 220 may continuously measure signal quality of a neighboring cell.

It is assumed that there is a rogue base station, for example, a rogue base station 230 shown in the figure, located near the terminal device 220. If a signal received by the terminal device 220 from the rogue base station 230 has better quality than a signal received from the base station 210, the terminal device 220 may receive a signal broadcast by the rogue base station, and the terminal device 220 cannot identify whether the received signal is from the base station 210 or the rogue base station 230.

The rogue base station 230 may attack the terminal device 220 by tampering with system information. For example, after receiving and copying the system information sent by the base station 210, the rogue base station 230 tampers with some parameter values in the system information, and then sends the tampered system information at a high power. In this way, the terminal device 220 can receive only the tampered system information.

In an example in which a SIB is used as system information, it is assumed that the SIB sent by the base station 210 is denoted as a first SIB, a SIB tampered with by the rogue base station for the first time is denoted as a second SIB, and a SIB tampered with by the rogue base station for the second time is denoted as a third SIB.

In a possible implementation, after receiving the first SIB sent by the base station 210, the rogue base station 230 increases a tag value (valueTag) in the first SIB by 1 to obtain the second SIB. For example, the tag value of the first SIB sent by the base station 210 is originally 1, and the rogue base station 230 changes the tag value to 2, so that the terminal device 220 considers that the originally stored first SIB is no longer valid, and re-obtains the SIB. For the terminal device 220, quality of the signal received from the rogue base station 230 received is better than quality of the signal received from the base station 210. Therefore, the SIB re-obtained by the terminal device is the second SIB from the rogue base station 230.

Then, the rogue base station 230 tampers with the SIB again, changes the tag value of the second SIB to 1 to obtain a third SIB, and then broadcasts the third SIB. The terminal device 220 finds that a tag value 1 of the third SIB is different from a tag value 2 of the originally stored second SIB, and re-obtains the SIB. The SIB obtained by the terminal device 220 this time is the third SIB from the rogue base station 230.

In this case, the rogue base station 230 completes an attack on the terminal device 220, and leaves the cell.

Then, the terminal device 220 may receive a SIB from the base station 210. However, because the tag value of the first SIB sent by the base station 210 is also 1, and is the same as the tag value of the third SIB locally stored by the terminal device 220, the terminal device 220 may consider that the currently stored third SIB is still valid. However, because the third SIB stored in the terminal device is a SIB tampered with by the rogue base station 230, and a parameter in the third SIB may be different from a parameter in the first SIB, some services may be unavailable to the terminal device 220, or services are available but user experience is poor.

Generally, valid duration of the SIB is relatively long, for example, 3 hours. In other words, the terminal device 220 may always have a problem that some services are unavailable, or some services are available but user experience is poor in a relatively long period of time, that is, the terminal device 220 may always fail to get rid of the impact caused by an attack from the rogue base station 230 in the long period of time.

This application provides a communication method. Impact that may be caused by tampering with system information on a terminal device is analyzed. An exception such as an abnormal quantity of times of sending signaling, a long-time unavailability of a service, or an abnormal change in a tag value of a SIB is used as a basis for determining that local system information of the terminal device is abnormal. When one or more of the foregoing exceptions exist, the terminal device receives the system information again, so that the terminal device can get rid of the impact caused by tampering with the system information, and provide a normal service for a user as soon as possible, to improve user experience.

The following describes in detail the communication method provided in embodiments of this application with reference to the accompanying drawings.

It should be noted that the following describes the communication method provided in this application by using an interaction between the terminal device and the access network device as an example. However, this should not constitute any limitation on an execution body of the communication method. Any subject that can implement the method in embodiments of this application by running a program that records code of the method can be used an execution body of the method provided in embodiments of this application. For example, the terminal device shown in the following embodiments may be replaced with a component in the terminal device, for example, a chip, a chip system, or another functional module that can invoke a program and execute the program. Similarly, the access network device may be replaced with a component in the access network device, for example, a chip, a chip system, or another functional module that can invoke a program and execute the program.

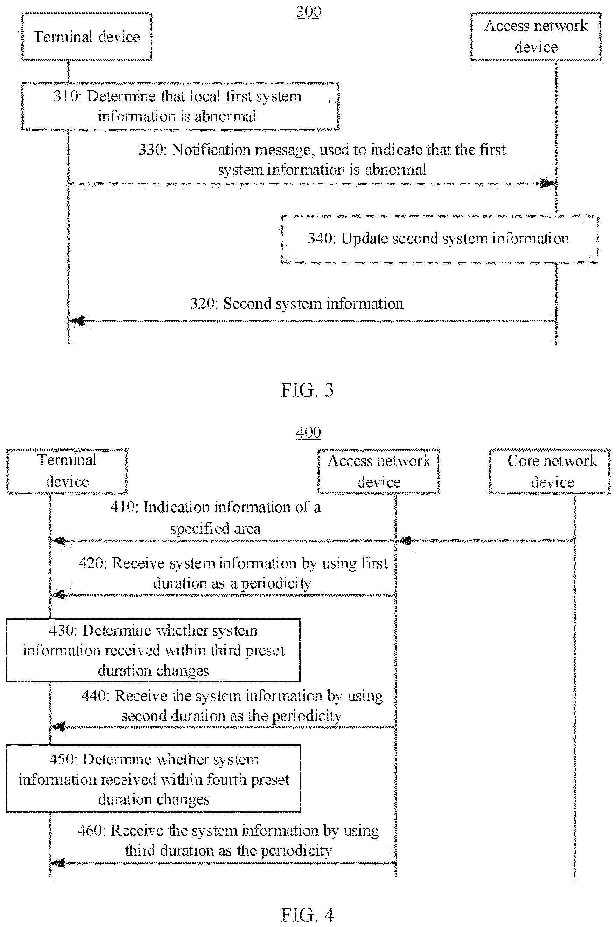

FIG. 3 is a schematic flowchart of a communication method according to an embodiment of this application. As shown in FIG. 3, the communication method 300 may include step 310 to step 340. The following describes the steps in the method 300 in detail.

Step 310: A terminal device determines that local first system information is abnormal.

It should be understood that the terminal device may be a terminal device attacked by a rogue base station. For example, the terminal device may be the terminal device 220 described above with reference to FIG. 2.

Herein, the first system information may be, for example, one or more of the MIB, any type of SIB, or the posSIB listed above, or the first system information may include all locally stored system information. Correspondingly, second system information described below may be one or more of the MIB, any type of SIB, or the posSIB, or may include all system information sent by the access network device.

This depends on implementation of the terminal device. If the terminal device determines specific abnormal system information based on the following exception determining condition, the first system information may be specifically one or more of the MIB, any type of SIB, or the posSIB. Then, the terminal device may receive, on demand (on-demand), the system information sent by the access network device. If the terminal device determines, based on the following exception determining condition, that only the locally stored system information is abnormal, the first system information may include all locally stored system information, and the second system information correspondingly includes all system information sent by the access network device.

After being attacked, the terminal device receives and sends data uses service use based on the locally stored system information. Because the locally stored system information is system information tampered with by the rogue base station, service experience is affected. For example, a service is unavailable, or a service is available but experience deteriorates. Therefore, whether the locally stored system information is abnormal may be determined based on services that may be affected by different system information.

For example, the terminal device may determine, by using one or more of the following conditions, that the local first system information is abnormal:
Condition 1: A quantity of times of sending first signaling is greater than or equal to a first preset threshold within first preset duration.
Condition 2: A time length in which a first service is unavailable is greater than or equal to a second preset threshold.
Condition 3: A change trend of a tag value of a SIB is abnormal.
Condition 4: A quantity of changes in a tag value of a same SIB is greater than or equal to a third preset threshold within second preset duration.

With reference to the four conditions listed above, the following separately uses examples to describe specific implementations in which the terminal device determines that the local first system information is abnormal.

### Condition 1:

In an example, the first signaling is a tracking area update (tracking area update, TAU) request message, and the first system information includes information related to a TAC.

The first system information includes, for example, a SIB 1. After the SIB 1 is tampered with, a tracking area code (tracking area code, TAC) becomes different. As a result, the terminal device may frequently initiate TAU. A possible implementation of initiating the tracking area update by the terminal device is that the terminal device sends a TAU request message to the access network device. Therefore, if the terminal device frequently sends the TAU request message in a period of time, causing a sharp increase in signaling overheads, it may be determined that the SIB 1 stored in the terminal device is abnormal, and the SIB 1 may be tampered with by the rogue base station.

It should be understood that the TAU request message is merely an example of the first signaling, and should not constitute any limitation on embodiments of this application. For example, the first signaling may alternatively be another message related to the TAU, for example, may be another message used to request the TAU.

In another example, the first signaling is a message used to transmit a random access preamble in a random access procedure, and the first system information includes information related to a random access configuration.

As described above, in the random access procedure, an MSG 1 may be used to transmit the random access preamble. The first signaling may be, for example, the MSG 1 or another message that may be used to transmit the random access preamble.

The first system information includes, for example, a SIB 1. Because the SIB 1 may include a random access configuration parameter, if the configuration parameter in the SIB 1 is modified, the terminal device initiates the random access procedure based on an incorrect parameter. Because the terminal device cannot receive a response, for example, the foregoing random access response, from the access network device if sending the MSG 1 based on an incorrect parameter, the terminal device may frequently send the MSG 1. If the terminal device frequently sends the MSG 1 in a period of time, causing a sharp increase in signaling overheads, it may be determined that the SIB 1 stored in the terminal device is abnormal, and the SIB 1 may be tampered with by the rogue base station.

A possible implementation in which the terminal device determines whether the condition 1 is met is that the terminal device locally maintains a counter to record a quantity of times of sending the first signaling. The counter may start timing from the first time of sending the first signaling, and a time length is first preset duration. Each time the terminal device sends the first signaling, the value of the counter is increased by one. If the quantity of times of sending the first signaling is greater than or equal to a first preset threshold before the counter expires, it may be determined that the local first system information is abnormal.

### Condition 2:

In an example, the first service is a multimedia broadcast multicast service (MBMS), and the first system information is information related to scheduling and receiving of the MBMS.

For example, in LTE, configuration information of the MBMS may be carried in a SIB 15, and scheduling information of the SIB 15 may be carried in a SIB 1. In a possible case, the SIB 1 is tampered with, and the tampered SIB 1 does not carry the SIB 15. In this case, the terminal device cannot receive the scheduling information of the MBMS, and therefore cannot use the MBMS. In another possible case, the SIB 15 is tampered with, and an incorrect time is configured for the MBMS in the tampered SIB 15. As a result, the terminal device uses the MBMS at the incorrect time, and the MBMS service is unavailable for a long time.

It should be understood that the SIB 1 and the SIB 15 that are in the foregoing examples and that are related to scheduling and receiving of the MBMS are merely examples, and the system information related to scheduling and receiving of the MBMS further includes a SIB 13, a SIB 20, and the like. Based on a same principle as the foregoing examples, the terminal device can also determine whether the locally stored SIB 13 or SIB 20 is abnormal.

It should be further understood that the foregoing system information related to scheduling and receiving of the MBMS is merely described by using system information in an LTE system as an example, and should not constitute any limitation on embodiments of this application. In NR, whether system information related to scheduling and receiving of the MBMS is abnormal can also be determined with reference to the foregoing method. For brevity, the system information is not listed one by one herein.

In another example, the first service is a random access service, and the first system information includes information related to access control.

The access network device may restrict an accessed terminal device by using an access control parameter. For example, the access control parameter may be carried in a universal access control (universal access control, UAC) parameter in a SIB 1 in NR or an extended access restriction (extended access barring, EAB) parameter in a SIB 2 in LTE. The first system information includes, for example, a SIB 1 or a SIB 2.

The access control parameter may include, for example, an access category (access category), an access class (access class), an access barring factor (ac-BarringFactor), and an access barring time (ac-BarringTime). If the access category (access category) and the access class (access class) are tampered with, the terminal device that can originally initiate the random access procedure may not be able to initiate the random access procedure. Alternatively, the terminal device may perform access control by using an incorrect parameter such as the access barring factor (ac-BarringFactor) or the access barring time (ac-BarringTime).

Based on the foregoing possible cases, the random access service may be unavailable to the terminal device for a long time.

In still another example, the first service includes a cell selection service and a cell reselection service, and the first system information includes information related to cell selection.

The first system information includes, for example, a SIB 1. The SIB 1 includes fields such as intra-frequency cell reselection (intraFreqReselection) and cell selection information (CellSelectionInfo). The intra-frequency cell reselection field may be used to indicate whether the terminal device can perform intra-frequency cell reselection. For example, if the intra-frequency cell reselection field is "not allowed (notAllowed)", it indicates that the terminal device cannot perform intra-frequency cell reselection. A value of cell selection information may be used to indicate a minimum allowed access level (Q-RxLevMin) value for performing cell selection or cell reselection by the terminal device.

If the intra-frequency cell reselection field is changed into "not allowed", the terminal device cannot select an intra-frequency cell. This may affect a cell finally selected by the terminal device for access. For example, the terminal device cannot select a proper cell for access, or can access a cell but experience is poor.

If the value of the cell selection information is tampered with, the terminal device may perform cell selection or cell reselection by using an abnormal minimum allowed access level value. This may affect a cell finally selected by the terminal device for access. For example, the terminal device cannot select a proper cell for access, or can access a cell but experience is poor.

In addition to the SIB 1, a SIB 3 to a SIB 8 also include parameters related to the cell selection service or the cell reselection service. If one or more of the SIB 3 to the SIB 8 are tampered with, the terminal device may use an incorrect parameter to perform intra-frequency cell selection, inter-frequency cell selection, and/or cross-radio access technology (radio access technology, RAT) cell reselection. Finally, a cell finally selected by the terminal device for access is affected. For example, the terminal device cannot select a proper cell for access, or can access a cell but experience is poor. Therefore, the first system information may include, for example, one or more of the following: the SIB 1, the SIB 3, the SIB 4, the SIB 5, the SIB 6, the SIB 7, and the SIB 8.

Based on the foregoing possible cases, the cell selection service or the cell reselection service may be unavailable for the terminal device for a long time, or may be available but experience is poor.

In yet another example, the first service is a cell access service, and the first system information includes information related to access control.

The first system information includes, for example, a SIB 1. The SIB1 includes a cell barred (CellBarred) field, and the field may be used to indicate whether access to the cell is barred. For example, if the cell barred field is "barred (barred)", it indicates that the terminal device cannot access the cell.

If the cell barred field is not changed into "barred", a cell that can be originally accessed by the terminal device may be barred from accessing. This may cause the terminal device to perform cell reselection, or cannot find a proper cell for access.

In still another example, the first service is a service provided by OSI, and the first system information includes a SIB 1.

As described above, scheduling of another SIB is defined in the SIB 1. Specifically, the SIB 1 further includes a scheduling information list (schedulingInfoList). The scheduling information list field may be used to indicate a periodicity in which the terminal device receives an SI message and an SI window length.

If the scheduling information list field is tampered with, the terminal device may receive the SI message by using an incorrect SI periodicity and an incorrect SI window length. Consequently, the terminal device may not receive some or all SI messages. Incomplete reception of the SI messages may cause a loss of the OSI. Consequently, the service provided by the OSI is unavailable to the terminal device for a long time.

A possible implementation in which the terminal device determines whether the condition 2 is met is that the terminal device locally maintains a timer to record duration in which the first service is unavailable. For example, the terminal device may start timing when the first service is found unavailable for the first time. If the duration in which the first service is unavailable to the terminal device is greater than or equal to a second preset threshold, it is determined that the local first system information is abnormal.

### Condition 3:

As described above, a tag value of each SIB may increase with each update of the SIB. If a change in a tag value of a SIB does not present an increasing trend, for example, the rogue base station described above increases the tag value by 1 to trigger the terminal device to update the local system information, and then subtracts 1 from the tag value to deceive that the local system information of the terminal device is system information sent by a normal base station. A change trend of increasing the tag value from 1 to 2 and then decreasing the tag value to 1 is abnormal. Therefore, the terminal device can determine that the local SIB is abnormal and may be a SIB tampered with by the rogue base station.

### Condition 4:

In addition to the foregoing manner of deceiving the terminal device by increasing the tag value by 1 and then subtracting 1 from the tag value, the rogue base station may further increase the tag value by 1 to trigger the terminal device to update the local system information to the tampered system information, quickly increase the tag value to a preset value, then return to 0, and then recount. In this way, a quantity of changes in the tag value is greatly increased compared with normal system information update. Therefore, when the terminal device determines that a quantity of changes in the tag value is greater than or equal to a third preset threshold within second preset duration, the terminal device may determine that the local SIB is abnormal and may be a SIB tampered with by the rogue base station.

It should be understood that whether the quantity of changes in the tag value of the same SIB is greater than or equal to the third preset threshold within the second preset duration is used to evaluate a change speed of the tag value, which may be converted into another parameter such as a change rate (that is, a quantity of times of changes/duration). This is not limited in embodiments of this application.

It can be learned that because corresponding tag values are configured for most types of SIBs in a current protocol, the foregoing condition 3 and condition 4 may be used to determine whether any SIB configured with a tag value is abnormal, that is, the first system information in the condition 3 or condition 4 may be an SIB configured with a tag value.

It should be understood that with reference to the conditions 1 to 4, the foregoing separately lists exceptions that may occur when different system information is tampered with and specific processes of how the terminal device determines the exceptions. However, these examples are merely shown for ease of understanding. This application does not exclude a possibility that other system information is defined in a future protocol to implement the same or similar function described above. In this case, the first system information listed above may be replaced with other specific system information. Embodiments of this application include but are not limited thereto.

Step 320: The terminal device receives second system information from the access network device, where the second system information is used to update the first system information.

After determining that the local first system information is abnormal, the terminal device may receive the second system information from the access network device again to update the local first system information. In a possible implementation, the terminal device replaces the local first system information with the received second system information.

There may be a plurality of implementations in which the terminal device receives the second system information from the access network device. In a first possible implementation, the terminal device may actively receive the second system information from the access network device. In a second possible implementation, the terminal device may report an exception of the local first system information to the access network device to trigger the access network device to send the second system information. The following separately describes the two possible implementations in detail.

In the first possible implementation, the terminal device may actively receive the system information sent by the access network device. It should be understood that the access network device herein may be, for example, a normal base station rather than a rogue base station. For ease of distinguishing from the local first system information of the terminal device, the system information sent by the access network device is denoted as second system information herein.

Because the access network device does not perceive that the terminal device is attacked, the access network device does not actively update the system information. Therefore, the access network device may periodically send the system information according to an existing mechanism. A form in which the access network device sends the system information may be, for example, broadcast or unicast. This is not limited in embodiments of this application. For example, the terminal device may receive the system information broadcast by the access network device, or may receive, in an on-demand (on-demand) manner, the system information sent by the access network device, or the terminal device in a connected state may receive, by using an RRC connection, the system information sent by the access network device.

It may be understood that if the terminal device receives the system information broadcast by the access network device, the terminal device may update the local system information each time the terminal device receives the system information. For example, if the terminal device receives a SIB 1 in an SI periodicity, the terminal device updates a local SIB 1; and if the terminal device receives a SIB 3 in a next SI periodicity, the terminal device updates a local SIB 3. This process is repeated until all local system information is updated.

Then, the terminal device may store all received system information, or may store required system information as required. This is not limited in embodiments of this application. It may be understood that a process in which the terminal device stores the second system information includes storage of the tag value of the second system information.

If the terminal device receives the system information in the on-demand manner, the terminal device needs to determine specific abnormal system information in the abnormal first system information, and then can receive, from the access network device, the system information that actually needs to be updated. For example, if the terminal device determines that the local SIB 1 is abnormal, that is, the first system information is the SIB 1, the terminal device may receive the SIB 1 from the access network device, but does not receive other system information. Then, the terminal device may store all received second system information.

In the second possible implementation, the terminal device may send, to the access network device, a message indicating that the detected first system information is abnormal, to trigger the access network device to update the system information, so as to obtain the second system information.

Optionally, before step 320, the method 300 further includes the following steps.

Step 330: The terminal device sends a notification message to notify the access network device that the local first system information of the terminal device is abnormal. Correspondingly, the access network device receives the notification message.

Step 340: The access network device updates the second system information based on the notification message.

For example, the notification message may be implemented by reusing existing signaling.

In an example, the notification message is a message used to transmit a random access preamble. As described above, the message used to transmit the random access preamble may be specifically an MSG 1 sent by the terminal device in the random access procedure. For example, the terminal device may implicitly indicate, by using a random access preamble of a predefined index value, that the first system information is abnormal; or the terminal device may implicitly indicate, by using a predefined time domain resource and/or frequency domain resource, that the first system information is abnormal. The pre-defined index value and the pre-defined time domain resource and/or frequency domain resource may be specifically pre-defined in a protocol, or may be pre-negotiated by the access network device and the terminal device. This is not limited in embodiments of this application.

In another example, the notification message is an MSG 3 sent by the terminal device in the random access procedure. The MSG3 may be, for example, an uplink message that is sent based on a random access response and that is used to request to establish an RRC connection or request to re-establish an RRC connection. As described above, the message may be specifically the MSG 3 sent by the terminal device in the random access procedure. For example, the terminal device may add a pre-defined cause (cause) value to the MSG 3 to implicitly indicate that the first system information is abnormal. The cause value may be, for example, existing or newly added. This is not limited in embodiments of this application.

In still another example, the notification message is a message used to carry a measurement report, and the measurement report is obtained based on a minimization of drive test (minimization of drive test, MDT). For example, the measurement report may be caitied in RRC dedicated signaling. Therefore, the message may be, for example, RRC dedicated signaling.

It should be understood that the foregoing enumerated notification messages used to notify that the first system information is abnormal are merely examples, and the terminal device may further notify, by using newly added signaling, that the first system information is abnormal. For brevity, details are not described herein.

After receiving the notification message from the terminal device, the access network device may update system information, for example, update a tag value of the system information; or may update a system information parameter to obtain updated second system information. The access network device may send the updated second system information in a manner such as broadcast or unicast. It may be understood that the second system information received by the terminal device in step 320 is updated second system information.

Similar to the first implementation, the access network device may update all system information, or may update some system information based on a requirement of the terminal device. For example, if the terminal device reports that the SIB 2 is abnormal, the terminal device may update a tag value of the SIB 2, or update a tag value and a parameter of the SIB 2, and send an updated SIB 2.

It may be understood that in this implementation, another terminal device within coverage of the access network may further receive the second system information based on an update of the tag value of the second system information, and update the local system information.

In addition, it should be further understood that regardless of whether the access network device updates the tag value of the system information, a parameter of the second system information received by the terminal device is different from a parameter of the local first system information. This is because the first system information locally stored in the terminal device is tampered system information.

Based on the foregoing technical solution, after the terminal device is attacked by a rogue base station and stores tampered system information, the terminal device may use a quantity of times of sending signaling, duration in which a service is unavailable, whether a change in a tag value of a SIB is abnormal, or the like as a criterion for determining whether the system information is abnormal. When it is determined that an exception exists, the terminal device receives the system information from the access network device again, so that the terminal device can get rid of impact caused by the tampered system information as soon as possible, and provide a normal service for a user as soon as possible, to improve user experience.

Specific manners in which the terminal device gets rid of the impact caused by the rogue base station attack are not limited to the foregoing enumerated manners. In another implementation, the terminal device may adjust a valid time of the system information level by level to reduce duration of the impact caused by the tampered system information on the terminal device.

FIG. 4 is a schematic flowchart of a communication method according to another embodiment of this application. As shown in FIG. 4, the communication method 400 may include steps 410 to 460. The following describes the steps in the method 400 in detail.

It should be understood that system information in the method 400 shown in FIG. 4 may be specifically any one of the MIB, any type of SIB, or the posSIB listed above. In other words, for each of the MIB, any type of SIB, and the posSIB listed above, the terminal device may perform the method 400 to reduce duration of impact caused by tampered system information on a terminal device.

Step 410: The terminal device receives indication information of a specified area, where the indication information may be used to indicate the specified area. Correspondingly, the network device sends the indication information of the specified area.

As an example rather than a limitation, the indication information may be, for example, indication information carried in non-access stratum (non-access stratum, NAS) signaling. A core network device may send the NAS signaling to the terminal device by using an access network device, to notify the terminal device of the specified area.

The specified area may be, for example, an area indicated by a network device (for example, the core network device). Compared with another area, the area is more important to the terminal device. When the terminal device enters the specified area, an attack from a rogue base station needs to be prevented to a greater extent to reduce duration of the impact caused by the tampered system information on the terminal device.

It should be understood that the specified area may be determined for each terminal device, may be determined for each type of terminal device, or may be determined for terminal devices in a same cell. This is not limited in this embodiment of this application. A type of terminal device may be, for example, terminal devices having a same user priority or terminal devices that customize a same service. This is not limited in this application.

For ease of differentiation and description, an area that is not indicated by indication information is referred to as a non-specified area below. In other words, all areas except the specified area may be non-specified areas. It should be understood that the specified area and the non-specified area are named for ease of differentiation, and should not constitute any limitation on this embodiment of this application. For example, the specified area may also be referred to as an important area, and the non-specified area may also be referred to as a non-important area.

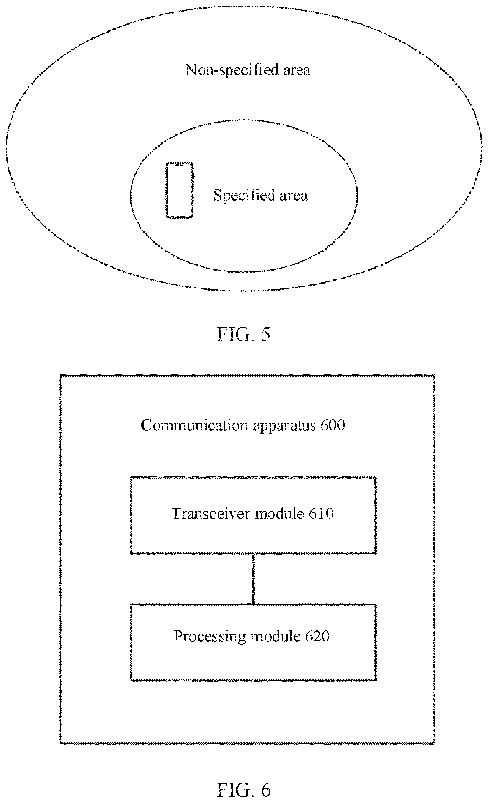

FIG. 5 is a schematic diagram of a specified area and a non-specified area. In this embodiment of this application, the terminal device may perform the following steps 420 to 460 after entering the specified area as shown in FIG. 5, to reduce impact of tampered system information on the terminal device by adjusting valid duration of the system information level by level. When the terminal device is in the non-specified area, the terminal device may not perform the method 400, and work according to an existing procedure.

It should be understood that the terminal device may be provided with a plurality of levels to adjust the valid duration of the system information level by level, and may be provided with a plurality of levels, for example, three or more levels, or may be provided with two levels. This is not limited in this embodiment of this application.

In the following embodiments, a process in which the terminal device adjusts the valid duration of the system information level by level is described by using an example of three levels. For example, the valid duration is adjusted to 3 seconds, 3 minutes, and 3 hours in sequence. However, this should not constitute any limitation on this embodiment of this application. A level set for the terminal device to adjust the valid duration of the system information and valid duration corresponding to each level are not limited in this embodiment of this application.

In step 420, after determining that the terminal device enters the specified area, the terminal device receives the system information by using first duration as a periodicity.

Herein, the system information is received by using the first duration as a periodicity. In other words, the first duration is used as a periodicity for receiving the system information, and the system information is received once in each periodicity. In other words, the first duration is used as the valid duration of the system information; and when the valid duration expires, the locally stored system information is deleted and the system information is received from the access network device again.

It should be understood that the first duration may be shorter duration than valid duration of existing system information. It is assumed that in a conventional technology, the valid duration of the system information is 3 hours. In this case, the terminal device may continuously receive the system information by using duration shorter than 3 hours as the valid duration. For example, if the first duration is set to 3 seconds, the terminal device may receive the system information every 3 seconds.

In step 430, the terminal device determines whether system information received within third preset duration changes.

The terminal device may continuously monitor system information in a period of time to determine whether the system information changes. For ease of differentiation and description, the monitoring duration of the terminal device is denoted as the third preset duration herein. For example, the third preset duration may start timing when the terminal device determines to enter the specified area and receives the system information by using the first duration as a periodicity. When the terminal device receives the system information by using the first duration as a periodicity, each time the terminal device receives the system information, the terminal device may compare the received system information with the locally stored system information to determine whether the system information changes.

It should be understood that changes in system information changes may include a change in a tag value of the system information and/or a change in a system information parameter in the system information. When any one of the foregoing changes, it may be determined that the system information changes.

The terminal device may repeatedly receive the system information by using the first duration as the valid duration, and determine whether the system information changes until the terminal device determines that the system information received within the third preset duration does not change.

Specifically, if the system information received by the terminal device within the third preset duration changes, it may be determined that the terminal device may be attacked by a rogue base station, the terminal device may continue to use the first duration as a periodicity, and use the third preset duration as the monitoring duration to re-time from a time at which the system information changes, to continuously monitor the system information. In other words, when determining that the system information received within the third preset duration changes, the terminal device may repeatedly perform step 420 and step 430.

If the terminal device determines that the system information received within the third preset duration does not change, the terminal device may perform step 440: Receive the system information by using second duration as a periodicity. The terminal device may further perform step 450: The terminal device determines whether system information received within fourth preset duration changes.

Herein, the second duration may be greater than the first duration. In other words, after monitoring the system information for a period of time, the terminal device can prolong the valid duration of the system information if finding that the system information does not change. For example, the first duration is 3 seconds, and the second duration is 3 minutes.

It can be understood that the system information is received by using the second duration as a periodicity. In other words, the second duration is used as a periodicity for receiving the system information, and the system information is received once in each periodicity. In other words, the second duration is used as the valid duration of the system information; and when the valid duration expires, the locally stored system information is deleted and the system information is received from the access network device again.

After adjusting the valid duration to the second duration, the terminal device may continue to monitor the system information for a period of time. For ease of differentiation and description, the monitoring duration of the terminal device is denoted as the fourth preset duration. It should be understood that the fourth preset duration and the foregoing third preset duration may be a same time length or different time lengths. This is not limited in this embodiment of this application. The monitoring duration is distinguished herein only for distinguishing between different valid duration.

The terminal device may repeatedly receive the system information by using the second duration as a periodicity, and determine whether the system information changes until the terminal device determines that the system information received within the fourth preset duration does not change.

Specifically, if the system information received by the terminal device within the fourth preset duration changes, it may be determined that the terminal device may be attacked by a rogue base station, and the terminal device may fall back to the first duration, receive the system information by using the first duration as a periodicity, determine whether the system information changes, and use the third preset duration as the monitoring duration to re-time from a time at which the system information changes, to continuously monitor the system information. In other words, once determining that the received system information changes, the terminal device may return to step 420, and re-perform step 420, step 430, and a subsequent step.

If the terminal device determines that the system information received within the third preset duration does not change, the terminal device may perform step 460, to be specific, receive the system information by using the third duration as a periodicity.

Herein, the third duration may be greater than the second duration. In other words, after monitoring the system information for a period of time, the terminal device can prolong the valid duration of the system information if finding that the system information does not change. For example, the second duration is 3 minutes, and the third duration is 3 hours.

It can be understood that the system information is received by using the third duration as a periodicity. In other words, the third duration is used as a periodicity for receiving the system information, and the system information is received once in each periodicity. In other words, the third duration is used as the valid duration of the system information; and when the valid duration expires, the system information is received again.

In this embodiment, three levels are set for the valid duration of the system information. After the valid duration is adjusted to the third duration, the terminal device is restored to a state of normally receiving the system information. However, the terminal device can still continuously monitor the system information. Once the system information changes, the terminal device may re-perform step 420, step 430, and a subsequent step. For brevity, details are not described herein again.

It should be understood that the foregoing describes the specific procedure of the method 400 by using three levels of valid duration as an example. However, this should not constitute any limitation on this embodiment of this application. Based on a same concept, a person skilled in the art may set any plurality of levels for the valid duration to monitor the system information.

Based on the foregoing solution, the terminal device may monitor, by using a method for adjusting the valid duration of the system information level by level, whether the system information is abnormal. Because the valid duration of the system information is adjusted to a relatively small value in an initial state, an exception of the system information may be found in a short time. In addition, once an exception occurs, the valid duration of the system information may be adjusted level by level again. That is, when the system information changes, the terminal device pays more attention to a change status of the system information, so that duration of impact of the tampered system information on the terminal device is controlled within a relatively short time range.

It should be understood that in the foregoing embodiments provided in this application, the methods provided in embodiments of this application are described from a perspective of interaction between the terminal device and the network device. To implement functions in the methods provided in the foregoing embodiments of this application, the network device and the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

With reference to FIG. 6 to FIG. 9, the following describes in detail a communication apparatus provided in embodiments of this application.

FIG. 6 is a schematic block diagram of a communication apparatus 600 according to an embodiment of this application. It should be understood that the communication apparatus 600 may correspond to the terminal device, the access network device, or the core network device in the foregoing method embodiments, and may be configured to perform steps performed by the terminal device, the access network device, or the core network device in the foregoing method embodiments.

As shown in FIG. 6, the communication apparatus 600 may include a transceiver module 610 and a processing module 620.

Optionally, the apparatus 600 may correspond to the terminal device in the embodiment shown in FIG. 3 or FIG. 4, and may include a module used by the terminal device to perform the method.

Specifically, when the apparatus 600 is configured to perform the method performed by the terminal device in FIG. 3, the transceiver module 610 may be configured to perform step 320 and step 330 in the method 300, and the processing module 620 may be configured to perform step 310 in the method 300.

When the apparatus 600 is configured to perform the method performed by the terminal device in FIG. 4, the transceiver module 610 may be configured to perform step 410, step 420, and step 440 in the method 400; and the processing module 620 may be configured to perform step 430 and step 450 in the method 400.

Optionally, the apparatus 600 may correspond to the access network device in the embodiment shown in FIG. 3 or FIG. 4, and may include a module used by the access network device to perform the method.

Specifically, when the apparatus 600 is configured to perform the method performed by the access network device in FIG. 3, the transceiver module 610 may be configured to perform step 320 and step 330 in the method 300, and the processing module 620 may be configured to perform step 340 in the method 300.

When the apparatus 600 is configured to perform the method performed by the access network device in FIG. 4, the transceiver module 610 may be configured to perform step 410, step 420, and step 440 in the method 400.

Optionally, the apparatus 600 may correspond to the core network device in the embodiment shown in FIG. 4, and may include a module used by the core network device to perform the method.

Specifically, when the apparatus 600 is configured to perform the method performed by the core network device in FIG. 4, the transceiver module 610 may be configured to perform step 410 in the method 400.

It should be understood that a specific process in which the modules perform the foregoing corresponding steps is described in detail in the foregoing method embodiments. For brevity, details are not described herein again.

It should be understood that in embodiments of this application, module division is an example, and is merely a logical function division. During actual implementation, another division manner may be used. In addition, the functional modules in embodiments of this application may be integrated into one processor, may exist alone physically, or two or more modules may be integrated into one module. The integrated module may be implemented in a form of hardware, or may be implemented in a form of a software functional module.

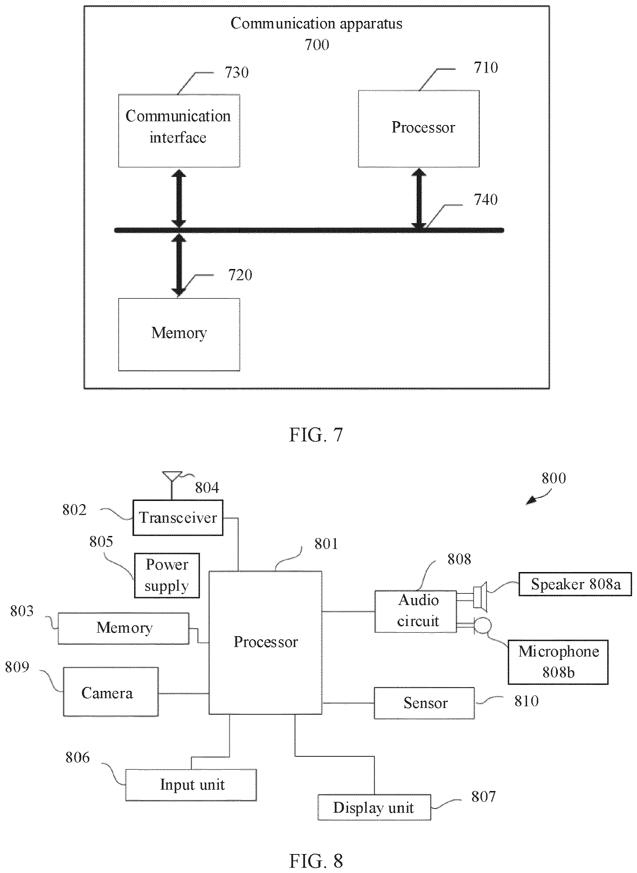

FIG. 7 is another schematic block diagram of a communication apparatus according to an embodiment of this application. As shown in FIG. 7, the communication apparatus 700 includes at least one processor 710, configured to implement functions of the terminal device, the access network device, or the core network device in the methods provided in embodiments of this application. For details, refer to detailed descriptions in the method examples. Details are not described herein again.

The communication apparatus 700 may further include at least one memory 720, configured to store program instructions and/or data. The memory 720 is coupled to the processor 710. The coupling in this embodiment of this application is an indirect coupling or communication connection between apparatuses, units, or modules; may be an electrical, mechanical, or another form; and is used for information exchange between apparatuses, units, or modules. The processor 710 may cooperate with the memory 720. The processor 710 may execute the program instructions stored in the memory 720. At least one of the at least one memory may be included in the processor

The communication apparatus 700 may further include a communication interface 730. The communication interface 730 may be a transceiver, an interface, a bus, a circuit, or an apparatus that can implement a transceiver function. The communication interface 730 is configured to communicate with another device by using a transmission medium, so that an apparatus in the communication apparatus 700 can communicate with the another device. The processor 710 receives and sends data through the communication interface 730, and is configured to implement the method performed by the terminal device, the method performed by the access network device, or the method performed by the core network device in the embodiment corresponding to FIG. 3 or FIG. 4.

A specific connection medium between the processor 710, the memory 720, and the communication interface 730 is not limited in this embodiment of this application. In this embodiment of this application, the memory 720, the processor 710, and the communication interface 730 are connected through a bus 740 in FIG. 7, and the bus is represented by a bold line in FIG. 7. A manner of a connection between other components is merely an example for description, and is not limited thereto. The bus may be classified into an address bus, a data bus, a control bus, and the like. For ease of representation, only one bold line is used for representation in FIG. 7, but this does not mean that there is only one bus or only one type of bus.

FIG. 8 is a schematic diagram of a structure of a terminal device according to an embodiment of this application. The terminal device may be applied to the system shown in FIG. 2. As shown in FIG. 8, the terminal device 800 includes a processor 801 and a transceiver 802. Optionally, the terminal device 800 further includes a memory 803. The processor 801, the transceiver 802, and the memory 803 communicate with each other through an internal connection path, to transfer a control signal and/or a data signal. The memory 803 is configured to store a computer program. The processor 801 is configured to invoke the computer program from the memory 803 and run the computer program, to control the transceiver 802 to send or receive a signal. Optionally, the terminal device 800 may further include an antenna 804, configured to send, by using a radio signal, uplink data or uplink control signaling output by the transceiver 802.

The processor 801 and the memory 803 may be integrated into one processing apparatus. The processor 801 is configured to execute program code stored in the memory 803 to implement the foregoing functions During specific implementation, the memory 803 may alternatively be integrated into the processor 801, or may be independent of the processor 801. The processor 801 may correspond to the processing module 620 in FIG. 6 or the processor 710 in FIG. 7.

The transceiver 802 may correspond to the transceiver module 610 in FIG. 6 or the communication interface 730 in FIG. 7. The transceiver 1202 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal device 800 may further include a power supply 805, configured to supply power to various components or circuits in the terminal device 800.

In addition, to improve functions of the terminal device, the terminal device 800 may further include one or more of an input unit 806, a display unit 807, an audio circuit 808, a camera 809, a sensor 810, and the like. The audio circuit may further include a speaker 808a, a microphone 808b, and the like.

It should be understood that the terminal device 800 shown in FIG. 8 can implement the processes related to the terminal device in the method embodiment shown in FIG. 3 or FIG. 4. Operations and/or functions of the modules in the terminal device 800 are separately intended to implement corresponding procedures in the foregoing method embodiments. For details, refer to the descriptions in the foregoing method embodiments. To avoid repetition, detailed descriptions are properly omitted herein.

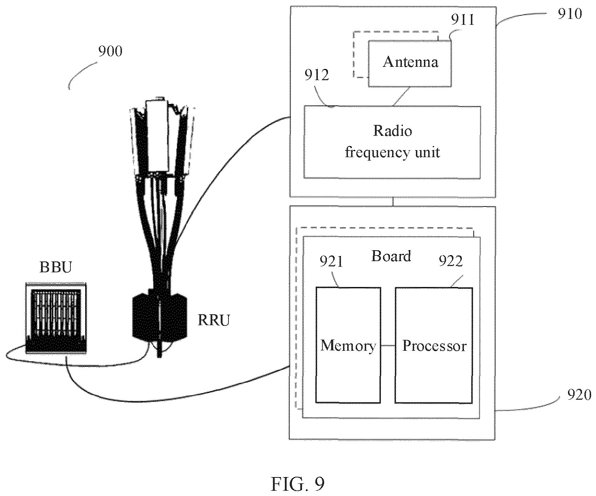

FIG. 9 is a schematic diagram of a structure of an access network device according to an embodiment of this application. The access network device may be, for example, a base station. The base station 900 may be applied to the system shown in FIG. 2, and performs functions of the access network device in the foregoing method embodiments. As shown in the figure, the base station 900 may include one or more radio frequency units, such as a remote radio unit (remote radio unit, RRU) 910 and one or more baseband units (BBU) (which may also be referred to as distributed units (DUs)) 920. The RRU 910 may be referred to as a transceiver unit, and corresponds to the transceiver module 610 in FIG. 6. Optionally, the RRU 910 may also be referred to as a transceiver, a transceiver circuit, a transceiver machine, or the like, and may include at least one antenna 911 and a radio frequency unit 912. Optionally, the RRU 910 may include a receiving unit and a transmitting unit. The receiving unit may correspond to a receiver (or referred to as a receiver machine or a receiver circuit). The transmitting unit may correspond to a transmitter (or referred to as a transmitter machine or a transmitter circuit). The RRU 910 is mainly configured to: receive and send radio frequency signals, and perform conversion between a radio frequency signal and a baseband signal. For example, the RRU 910 is configured to send indication information to a terminal device. The BBU 930 is mainly configured to: perform baseband processing, control the base station, and so on. The RRU 910 and the BBU 920 may be physically disposed together, or may be physically disposed separately, namely, a distributed base station.

The BBU 920 is a control center of the base station, and may also be referred to as a processing unit. The BBU 920 may correspond to the processing module 620 in FIG. 6, and is mainly configured to implement a baseband processing function such as channel coding, multiplexing, modulation, or spreading. For example, the BBU (the processing unit) may be configured to control the base station to perform an operation procedure related to the access network device in the foregoing method embodiments, for example, generate the indication information.

In an example, the BBU 920 may include one or more boards, and a plurality of boards may jointly support a radio access network (for example, an LTE network) in a single access standard, or may separately support radio access networks (for example, an LTE network, a 5G network, and another network) in different access standards. The BBU 920 further includes a memory 921 and a processor 922. The memory 921 is configured to store necessary instructions and data. The processor 922 is configured to control the base station to perform a necessary action, for example, configured to control the base station to perform an operation procedure related to the access network device in the foregoing method embodiments. The memory 921 and the processor 922 may serve one or more boards. In other words, a memory and a processor may be disposed on each board. Alternatively, a plurality of boards may share a same memory and a same processor. In addition, a necessary circuit may further be disposed on each board.

It should be understood that the base station 900 shown in FIG. 9 can implement the processes related to the access network device in the method embodiment shown in FIG. 3 or FIG. 4. Operations and/or functions of the modules in the base station 900 are separately intended to implement corresponding procedures in the foregoing method embodiments. For details, refer to the descriptions in the foregoing method embodiments. To avoid repetition, detailed descriptions are properly omitted herein.

The BBU 920 may be configured to perform an action that is implemented inside the access network device and that is described in the foregoing method embodiments. The RRU 910 may be configured to perform an action that is of the access network device sending information to or receiving information from the terminal device and that is described in the foregoing method embodiments. For details, refer to the descriptions in the foregoing method embodiments. Details are not described herein again.

It should be understood that the base station 900 shown in FIG. 9 is merely a possible architecture of the access network device, and should not constitute any limitation on this application. The method provided in this application is applicable to an access network device having another architecture, for example, an access network device including a CTJ, a DU, and an active antenna unit (active antenna unit, AAU). A specific architecture of the access network device is not limited in this application.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD); or may be a volatile memory (volatile memory), for example, a random access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

According to the methods provided in embodiments of this application, this application further provides a computer program product. The computer program product includes computer program code. When the computer program code is run on a computer, the computer is enabled to perform the method performed by the terminal device, the method performed by the access network device, or the method performed by the core network device in the embodiment shown in FIG. 3 or FIG. 4.

According to the methods provided in embodiments of this application, this application further provides a computer-readable storage medium. The computer-readable storage medium stores program code. When the program code is run on a computer, the computer is enabled to perform the method performed by the terminal device, the method performed by the access network device, or the method performed by the core network device in the embodiment shown in FIG. 3 or FIG. 4.

According to the methods provided in embodiments of this application, this application further provides a communication system. The communication system may include the foregoing terminal device, access network device, and core network device.

All or a part of the technical solutions provided in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, a terminal device, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, when there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

Apparently, a person skilled in the art may make various modifications and variations to this application without departing from the scope of this application. This application is intended to cover these modifications and variations of this application provided that they fall within the protection scope defined by the following claims and their equivalent technologies.

## Claims

1. A communication method, comprising:
when one or more of the following conditions are met, determining, by a terminal device, that local first system information is abnormal:
a quantity of times of sending first signaling is greater than or equal to a first preset threshold within first preset duration;
a time length in which a first service is unavailable is greater than or equal to a second preset threshold;
a change trend of a tag value of a same system information block SIB is abnormal; or
a quantity of changes in a tag value of a same SIB is greater than or equal to a third preset threshold within second preset duration; and
receiving, by the terminal device, second system information from an access network device, wherein the second system information is used to update the first system information.

2. The method according to claim 1, wherein the first signaling comprises a tracking area update TAU request message, and the first system information comprises information related to a tracking area code TAC.

3. The method according to claim 1, wherein the first service comprises a multimedia broadcast multicast service MBMS, and the first system information comprises information related to scheduling and receiving of the MBMS.

4. The method according to claim 1, wherein the first signaling is a message 1 MSG 1 in a random access procedure, and the first system information comprises information related to a random access configuration.

5. The method according to claim 1, wherein the first service comprises a cell selection service and a cell reselection service, and the first system information comprises information related to cell selection.

6. The method according to claim 1, wherein the first service comprises a random access service or a cell access service, and the first system information comprises information related to access control.

7. The method according to claim 1, wherein the first service comprises a service provided by other system information OSI, the first system information comprises a SIB type 1, and the SIB type 1 comprises scheduling information of the OSI.

8. The method according to any one of claims 1 to 7, further comprising:
sending, by the terminal device, a notification message to notify the access network device that the system information in the terminal device is abnormal;
the receiving, by the terminal device, the second system information from the access network device again comprises:
receiving, by the terminal device, the second system information from the base station again, wherein a tag value of the second system information is different from a tag value of the first system information.

9. The method according to claim 8, wherein a system information parameter in the second system information is different from a system information parameter in the first system information.

10. The method according to claim 8 or 9, wherein the notification message comprises the message 1 MSG 1 in the random access procedure; and
the sending, by the terminal device, a notification message to notify the access network device that the first system information is abnormal comprises:
sending, by the terminal device, the MSG 1, wherein the MSG 1 carries a random access preamble of a pre-defined index value, the random access preamble of the pre-defined index value is used to indicate to the access network device that the first system information is abnormal; or
sending, by the terminal device, the MSG 1 on a pre-defined time domain and/or frequency domain resource, wherein the pre-defined time domain and/or frequency domain resource is used to indicate to the access network device that the first system information is abnormal.

11. The method according to claim 8 or 9, wherein the notification message is a message 3 MSG 3 in the random access procedure; and
the sending, by the terminal device, a notification message to notify the access network device that the first system information is abnormal comprises:
sending, by the terminal device, the MSG 3, wherein the MSG 3 comprises a pre-defined cause value, and the pre-defined cause value is used to indicate to the access network device that the first system information is abnormal.

12. The method according to claim 8 or 9, wherein the notification message is radio resource control RRC dedicated signaling used to carry a measurement report, and the measurement report is obtained based on a minimization drive test MDT; and
the sending, by the terminal device, a notification message to notify the access network device that the first system information is abnormal comprises:
sending, by the terminal device, the RRC dedicated signaling, wherein the RRC dedicated signaling carries an indication indicating that the first system information is abnormal.

13. A communication method, comprising:
receiving, by an access network device, a notification message from a terminal device, wherein the notification message is used to indicate that first system information in the terminal device is abnormal; and
sending, by the access network device, second system information based on the notification message, wherein a tag value of the second system information is different from a tag value of the first system information.

14. The method according to claim 13, wherein a system information parameter in the second system information is different from a system information parameter in the first system information.

15. The method according to claim 13 or 14, wherein the sending, by the access network device, second system information comprises:
sending, by the access network device, all system information comprising the second system information.

16. The method according to any one of claims 13 to 15, wherein the notification message comprises a message 1 MSG 1 in a random access procedure; and
the receiving, by an access network device, a notification message, wherein the notification message is used to indicate that first system information is abnormal comprises:
receiving, by the access network device, the MSG 1, wherein the MSG 1 carries a random access preamble of a pre-defined index value, the random access preamble of the pre-defined index value is used to indicate to the access network device that the first system information is abnormal; or
receiving, by the access network device, the MSG 1 on a pre-defined time domain and/or frequency domain resource, wherein the pre-defined time domain and/or frequency domain resource is used to indicate to the access network device that the first system information is abnormal.

17. The method according to any one of claims 13 to 15, wherein the notification message is a message 3 MSG 3 in a random access procedure; and
the receiving, by an access network device, a notification message, wherein the notification message is used to indicate that first system information is abnormal comprises:
receiving, by the access network device, the MSG 3, wherein the MSG 3 comprises a pre-defined cause value, and the pre-defined cause value is used to indicate to the access network device that the first system information is abnormal.

18. The method according to any one of claims 13 to 15, wherein the notification message is radio resource control RRC dedicated signaling used to carry a measurement report, and the measurement report is obtained based on a minimization drive test MDT; and
the receiving, by an access network device, a notification message, wherein the notification message is used to indicate that first system information is abnormal comprises:
receiving, by the access network device, the RRC dedicated signaling, wherein the RRC dedicated signaling carries an indication indicating that the first system information is abnormal.

19. A communication apparatus, comprising a module configured to perform the method according to any one of claims 1 to 18.

20. A communication apparatus, comprising a processor, wherein the processor is configured to invoke program code to implement the method according to any one of claims 1 to 18.

21. A computer-readable storage medium, storing computer instructions, wherein when the instructions are run on a computer, the computer is enabled to perform the method according to any one of claims 1 to 18.

22. A computer program product, comprising a computer program, wherein when the computer program is run, a computer is enabled to perform the method according to any one of claims 1 to 18.
